# DEMANDE DE BREVET EUROPEEN

(11) **EP 4 790 387 A1**
(43) Date de publication de la demande: **12.08.2026**
(21) Numéro de dépôt: 25305182.5
(22) Date de dépôt: 07.02.2025
(51) Int. Cl.: G01N 21/3504, G01N 21/39, G01N 21/31, G01N 21/03

(54) **PROCÉDÉ DE MESURE DE DONNÉES REPRÉSENTATIVES DE TENEUR EN AU MOINS UN GAZ TRACEUR OU EN UN ENSEMBLE DE GAZ COMPRENANT LE GAZ TRACEUR, MÉTHODE ET ENSEMBLE ASSOCIÉS**

(71) Demandeur: TotalEnergies OneTech, 92400 Courbevoie (FR); Centre National de la Recherche Scientifique, 75016 Paris (FR); Université De Reims Champagne-Ardenne, 51097 Reims Cedex (FR)
(72) Inventeur: DUCLAUX, Olivier, Pau Cedex 64018 (FR); DONNAT, Ludovic, Pau Cedex 64018 (FR); JUERY, Catherine, Pau Cedex 64018 (FR); JOLY, Lilian, Pau Cedex 64018 (FR)
(74) Mandataire: Lavoix

(57) **Abrégé**

Le procédé l'injection, à des instants de mesure, dans la cellule de mesure portée par un drone d'un faisceau laser, à une longueur d'onde de mesure caractéristique du gaz traceur à détecter.

La signature spectrale du gaz traceur ou de l'ensemble de gaz est plus large qu'une largeur d'accordabilité de la source laser de mesure. Le procédé comprend l'injection, à des instants de référence, dans la cellule de mesure d'un faisceau laser de référence à une longueur d'onde de référence située à l'écart de ladite signature spectrale.

Le procédé comporte la transmission de données représentatives de teneur en gaz traceur obtenues à partir du signal de mesure et de données représentatives de référence obtenues à partir du signal de référence à un système de calcul pour calculer une teneur en gaz à partir des données représentatives de teneur en gaz traceur et des données représentatives de référence.

## Description

La présente invention concerne un procédé de mesure de données représentatives de teneurs en au moins un gaz traceur ou en un ensemble de gaz comprenant le gaz traceur, le procédé comprenant les étapes suivantes :
- vol d'un drone dans l'atmosphère à l'écart du sol, le drone comportant au moins une cellule de mesure optique et au moins une source laser de mesure, destinée à la détection du gaz traceur;
- injection, à une pluralité d'instants de mesure, dans la cellule de mesure portée par le drone d'un faisceau laser engendré par la source laser de mesure, à une longueur d'onde de mesure caractéristique du gaz traceur à détecter, la longueur d'onde de mesure étant située au sein d'une signature spectrale caractéristique du gaz traceur ou de l'ensemble de gaz à quantifier ;
- détection, par un détecteur de mesure d'un signal de mesure provenant de la cellule de mesure et résultant de l'injection du faisceau laser de mesure dans la cellule de mesure.

Un tel procédé est destiné notamment à déterminer les teneurs en un ensemble de gaz présent dans l'atmosphère, l'ensemble de gaz présentant une signature spectrale large, généralement supérieure à la largeur d'accordabilité d'un laser. Il s'applique en particulier à la détermination et à la quantification des émissions de composés organiques volatils, via des campagnes de mesure ponctuelles ou périodiques.

Les composés organiques volatils sont par exemple des hydrocarbures tels que l'éthane, le butane, le propane, des aromatiques tels que le benzène. Plus généralement, un composé organique volatil est un composé organique ayant une pression de vapeur de 0,01 kPa ou plus à une température de 293,15K, par exemple tel que défini dans la Directive 1999/13/CE du Conseil Européen du 11 mars 1999.

La Norme Européenne EN 17628:2022 définit des méthodologies applicables pour le contrôle ponctuel des valeurs d'émission à partir de mesures de composés organiques volatils dans l'air ambiant. Des exemples de technologies standardisées sont le Lidar Dial, le SOF (mesure de flux d'occultation solaire ou « Solar Occultation Flux »), le largage de traceurs suivi par une mesure infrarouge mobile (Infra-Rouge par Transformée de Fourier ou FTIR) et la modélisation inverse de dispersion (« Reverse Dispersion Modeling ») pouvant être utilisable avec tout type de mesure (par exemple, détecteur à ionisation de flamme, mesures ultra-violet ou infrarouge).

Pour la mesure d'un seul gaz tel que le méthane, WO2021191360 décrit des méthodes utilisant un capteur embarqué sur drone qui permettent l'acquisition à haute fréquence de données tridimensionnelles, que seules les techniques optiques à distance pouvaient jusqu'alors atteindre (par exemple par Lidar, mesures de flux d'occultation solaire).

Les capteurs de mesure d'une pluralité de composés organiques volatils sont difficiles à embarquer sur un drone. En particulier, les capteurs tels que les capteurs à photoionisation (« PID » pour Photo-lonization Detectors) sont efficaces pour mesurer une grande gamme de composés organiques volatils. Ils sont cependant généralement trop peu précis, et ne détectent pas les alcanes légers (par exemple ceux ayant entre 2 et 4 atomes de carbone), ils sont peu sensibles pour les alcanes ayant entre 5 et 6 atomes de carbone. Ils ne sont pas non plus assez rapides (1 à 2 Hz) pour suivre les variations de concentration lors d'un déplacement rapide sur un drone.

Un but de l'invention est donc de disposer d'un procédé permettant de recueillir des données représentatives significatives pour quantifier les émissions d'un gaz ou d'un ensemble de gaz présentant une signature spectrale large, en particulier les émissions de composés organiques volatils, le procédé étant simple à mettre en oeuvre, tout en donnant des résultats précis.

En effet, l'invention a pour objet un procédé du type précité, caractérisé en ce que la signature spectrale du gaz traceur ou de l'ensemble de gaz à mesurer est plus large qu'une largeur d'accordabilité de la source laser de mesure, le procédé comprenant les étapes suivantes:
- injection, à au moins un instant de référence, dans une cellule de mesure portée par le drone d'un faisceau laser de référence émis par une source laser de référence à une longueur d'onde de référence située à l'écart de la signature spectrale du gaz traceur ou de l'ensemble de gaz ;
- détection par un détecteur de référence d'un signal de référence provenant de l'injection du faisceau laser de référence dans la cellule de mesure portée par le drone;
- transmission de données représentatives de teneur en gaz traceur obtenues à partir du signal de mesure et de données représentatives de référence obtenues à partir du signal de référence à un système de calcul configuré pour calculer une teneur en gaz traceur ou/et en l'ensemble de gaz à partir des données représentatives de teneur en gaz traceur et des données représentatives de référence.

Le procédé selon l'invention peut comprendre l'une ou plusieurs des caractéristiques suivantes, prises isolément ou suivant toutes combinaisons techniquement possibles :
- l'étape d'injection du faisceau laser de référence est effectuée à une pluralité d'instants de référence, chaque instant de référence correspondant à un instant de mesure.
- le faisceau laser de référence est injecté dans la même cellule de mesure que le faisceau laser de mesure.
- le procédé comprend une alternance d'injection du faisceau laser de mesure à chaque instant de mesure, et du faisceau laser de référence à chaque instant de référence, respectivement sans injection du faisceau laser de référence lorsque le faisceau laser de mesure est injecté et sans injection du faisceau laser de mesure lorsque le faisceau laser de référence est injecté.
- au moins une cellule de mesure comporte deux miroirs situés en regard et à l'écart l'un de l'autre et délimitant entre eux une cavité de mesure, le faisceau laser de mesure étant injecté entre les deux miroirs et se réfléchissant successivement sur les deux miroirs avant d'être extrait vers le détecteur de mesure hors de la cavité de mesure.
- la signature spectrale est la signature spectrale d'un ensemble de composés organiques volatils.
- la fréquence d'injection du faisceau laser de mesure dans la cellule de mesure est supérieure à 10 Hz et est comprise notamment entre 20 Hz et 100 Hz.
- Le procédé comprend la mesure de données de correction obtenues dans la signature spectrale à l'aide d'un capteur additionnel opérant à une fréquence de mesure inférieure à la fréquence d'injection du faisceau laser de mesure, le capteur additionnel étant configuré pour détecter les données de correction sur une largeur spectrale supérieure à la largeur d'accordabilité de la source laser de mesure, le procédé comprenant la transmission des données de correction obtenues par le capteur additionnel au système de calcul, le système de calcul étant configuré pour calculer la teneur en gaz traceur ou en l'ensemble de gaz en utilisant les données de correction.

L'invention a également pour objet une méthode de détermination d'une teneur en au moins un gaz traceur ou en un ensemble de gaz comprenant le gaz traceur, comprenant les étapes suivantes :
- mise en œuvre d'un procédé de mesure de données représentatives telle que défini plus haut ;
- calcul, par un système de calcul de la teneur en gaz traceur ou en l'ensemble de gaz à une pluralité d'instants de mesure en utilisant les données représentatives du gaz traceur et les données représentatives de référence.

La méthode selon l'invention peut comprendre l'une ou plusieurs des caractéristiques suivantes, prises isolément ou suivant toutes combinaisons techniquement possibles :
- le calcul comprend, pour chaque donnée représentative de teneur obtenue à un instant de mesure, la détermination d'une intensité du signal de mesure constituant les données représentatives de teneur, et la détermination d'une intensité du signal de référence constituant les données représentatives de référence, le calcul de la teneur en gaz traceur ou en l'ensemble de gaz comprenant un calcul d'une différence entre l'intensité du signal de mesure et l'intensité du signal de référence.
- le calcul de la teneur en gaz traceur ou en l'ensemble de gaz comprend le calcul d'une teneur en un ensemble de gaz en utilisant les données représentatives de teneur mesurées à la longueur d'onde de mesure au sein de la signature spectrale de l'ensemble de gaz, les données représentatives de référence mesurées à l'écart de la signature spectrale et un modèle de calibration configuré pour déterminer une concentration en tous les gaz de l'ensemble de gaz en utilisant des données représentatives de teneur et des données représentative de référence, en utilisant avantageusement une spéciation de l'ensemble de gaz présent dans l'ensemble de gaz.
- le calcul de la teneur en gaz traceur ou en l'ensemble de gaz comprend le calcul d'une teneur corrigée en gaz traceur à partir des données représentatives de teneur et des données de référence, le modèle de calibration reliant la teneur corrigée en gaz traceur à une concentration en tous les gaz de l'ensemble de gaz.

L'invention a également pour objet un ensemble de détermination de teneurs en au moins un gaz traceur ou en un ensemble de gaz comprenant le gaz traceur, l'ensemble de détermination comprenant :
- un drone configuré pour voler dans l'atmosphère à l'écart du sol, le drone comportant au moins une cellule de mesure optique et une source laser de mesure, destinée à la détection du gaz traceur, un système de commande configuré pour activer la source laser de mesure pour l'injection à une pluralité d'instants de mesure, dans la cellule de mesure portée par le drone, d'un faisceau laser engendré par la source laser de mesure, à une longueur d'onde de mesure caractéristique du gaz traceur à détecter

le drone comportant en outre un détecteur de mesure d'un signal de mesure provenant de la cellule de mesure et résultant de l'injection du faisceau laser de mesure dans la cellule de mesure, la longueur d'onde de mesure étant située au sein d'une signature spectrale caractéristique du gaz traceur ou de l'ensemble de gaz à quantifier,
caractérisé en ce que la signature spectrale du gaz traceur ou de l'ensemble de gaz à mesurer est plus large qu'une largeur d'accordabilité de la source laser de mesure,
le drone comportant ;
   - une source laser de référence, le système de commande étant configuré pour activer la source laser de référence à au moins un instant de référence, pour injecter dans une cellule de mesure portée par le drone un faisceau laser de référence émis par la source laser de référence à une longueur d'onde de référence située à l'écart de la signature spectrale du gaz traceur ou de l'ensemble de gaz ;
   - un détecteur de référence d'un signal de référence provenant de l'injection du faisceau laser de référence dans la cellule de mesure portée par le drone;
   - un système de transmission de données représentatives de teneur en gaz traceur obtenues à partir du signal de mesure et de données représentatives de référence obtenues à partir du signal de référence à un système de calcul,
l'ensemble de détermination comprenant un système de calcul configuré pour calculer une teneur en gaz traceur ou/et en l'ensemble de gaz à partir des données représentatives de teneur en gaz traceur et des données représentatives de référence.

L'ensemble selon l'invention peut comprendre l'une ou plusieurs des caractéristiques suivantes, prises isolément ou suivant toutes combinaisons techniquement possibles :
- le faisceau laser de référence est injecté dans la même cellule de mesure que le faisceau laser de mesure ;
- le drone comporte un capteur additionnel opérant à une fréquence de mesure inférieure à la fréquence d'injection du faisceau laser de mesure, le capteur additionnel étant configuré pour mesurer des données de correction obtenues dans la signature spectrale sur une largeur spectrale supérieure à la largeur d'accordabilité de la source laser de mesure, le système de transmission étant configuré pour transmettre les données de correction obtenues par le capteur additionnel au système de calcul, le système de calcul étant configuré pour calculer la teneur en gaz traceur ou en l'ensemble de gaz en utilisant les données de correction.

L'invention a aussi pour objet un procédé de mesure de données représentatives de teneurs en au moins un gaz traceur ou en un ensemble de gaz comportant le gaz traceur, le procédé comprenant les étapes suivantes :
- vol d'un drone dans l'atmosphère à l'écart du sol, le drone comportant au moins une cellule de mesure optique et au moins une source laser de mesure, destinée à la détection du gaz traceur;
- injection, à une pluralité d'instants de mesure, dans la cellule de mesure portée par le drone, d'un faisceau laser engendré par la source laser de mesure, à une longueur d'onde de mesure caractéristique du gaz traceur à détecter, la longueur d'onde de mesure étant située au sein d'une signature spectrale caractéristique du gaz traceur ou de l'ensemble de gaz à quantifier ;
- détection, par un détecteur de mesure d'un signal de mesure provenant de la cellule de mesure et résultant de l'injection du faisceau laser de mesure dans la cellule de mesure,

caractérisé en ce que la signature spectrale du gaz traceur ou de l'ensemble de gaz à mesurer est plus large qu'une largeur d'accordabilité de la source laser de mesure, le procédé comprenant la mesure de données de correction obtenues dans la signature spectrale à l'aide d'un capteur additionnel opérant à une fréquence de mesure inférieure à la fréquence d'injection du faisceau laser de mesure, le capteur additionnel étant configuré pour détecter les données de correction sur une largeur spectrale supérieure à la largeur d'accordabilité de la source laser de mesure,
le procédé comprenant la transmission de données représentatives de teneur en gaz traceur obtenues à partir du signal de mesure et de données de correction obtenues à partir du capteur additionnel à un système de calcul configuré pour calculer une teneur en gaz traceur ou/et en l'ensemble de gaz à partir des données représentatives de teneur en gaz traceur et des données de correction.

L'invention a aussi pour objet une méthode de détermination d'une teneur en au moins un gaz traceur ou en un ensemble de gaz comprenant le gaz traceur, comprenant les étapes suivantes :
- mise en œuvre d'un procédé de mesure de données représentatives tel que défini ci-dessus ;
calcul, par un système de calcul de la teneur en gaz traceur ou en l'ensemble de gaz à une pluralité d'instants de mesure en utilisant les données représentatives du gaz traceur et les données de correction.

Le procédé et la méthode définis ci-dessus ne comprennent pas nécessairement d'injection, à au moins un instant de référence, dans une cellule de mesure portée par le drone d'un faisceau laser de référence émis par une source laser de référence à une longueur d'onde de référence située à l'écart de la signature spectrale du gaz traceur ou de l'ensemble de gaz, ni de détection par un détecteur de référence d'un signal de référence provenant de l'injection du faisceau laser de référence dans la cellule de mesure portée par le drone.

L'invention a également pour objet un ensemble de détermination de teneurs en au moins un gaz traceur ou en un ensemble de gaz comprenant le gaz traceur, l'ensemble de détermination comprenant :
- un drone configuré pour voler dans l'atmosphère à l'écart du sol, le drone comportant au moins une cellule de mesure optique et une source laser de mesure, destinée à la détection du gaz traceur, un système de commande configuré pour activer la source laser de mesure pour l'injection à une pluralité d'instants de mesure, dans la cellule de mesure portée par le drone, un faisceau laser engendré par la source laser de mesure, à une longueur d'onde de mesure caractéristique du gaz traceur à détecter le drone comportant en outre un détecteur de mesure d'un signal de mesure provenant de la cellule de mesure et résultant de l'injection du faisceau laser de mesure dans la cellule de mesure, la longueur d'onde de mesure étant située au sein d'une signature spectrale caractéristique du gaz traceur ou de l'ensemble de gaz à quantifier, caractérisé en ce que la signature spectrale du gaz traceur ou de l'ensemble de gaz à mesurer est plus large qu'une largeur d'accordabilité de la source laser de mesure,
le drone comportant ;
- au moins un capteur additionnel opérant à une fréquence de mesure inférieure à la fréquence d'injection du faisceau laser de mesure, le capteur additionnel étant configuré pour mesurer des données de correction obtenues dans la signature spectrale sur une largeur spectrale supérieure à la largeur d'accordabilité de la source laser de mesure ;
- un système de transmission de données représentatives de teneur en gaz traceur obtenues à partir du signal de mesure et de données représentatives de référence obtenues à partir du signal de référence à un système de calcul

l'ensemble de détermination comprenant un système de calcul configuré pour calculer une teneur en gaz traceur ou/et en l'ensemble de gaz à partir des données représentatives de teneur en gaz traceur.
le système de transmission étant configuré pour transmettre les données de correction obtenues par le capteur additionnel au système de calcul, le système de calcul étant configuré pour calculer la teneur en gaz traceur ou en l'ensemble de gaz en utilisant les données de correction.

L'invention sera mieux comprise, à la lecture de la description qui va suivre, faite en se référant aux dessins annexés, sur lesquels :
- [Fig. 1] La figure 1 est une vue d'un premier ensemble de mesure selon l'invention, comprenant un drone représenté en perspective et un système de calcul associé, représenté schématiquement, destiné à recevoir des données recueillies par le drone ;
- [Fig. 2] La figure 2 est vue en perspective d'un capteur de mesure porté par le drone, le capteur de mesure comportant une source laser de référence et une source laser de mesure injectant des faisceaux lasers respectifs dans une cavité de mesure, avec le système de commande du capteur de mesure ;
- [Fig. 3] La figure 3 est une vue d'une signature spectrale d'un ensemble de gaz constitué de composés organiques volatils, sur laquelle sont représentées la longueur d'onde de référence de la source laser de référence et la longueur d'onde de mesure de la source laser de mesure montées dans la cellule de mesure de la figure 2 ;
- [Fig. 4] La figure 4 illustre schématiquement l'introduction successive du faisceau laser de référence issu de la source laser de référence et du faisceau laser de mesure issu de la source laser de mesure dans la cavité de mesure ;
- [Fig. 5] La figure 5 illustre un exemple de trajectoire de déplacement du drone pour la mise en œuvre du procédé de mesure selon l'invention ;

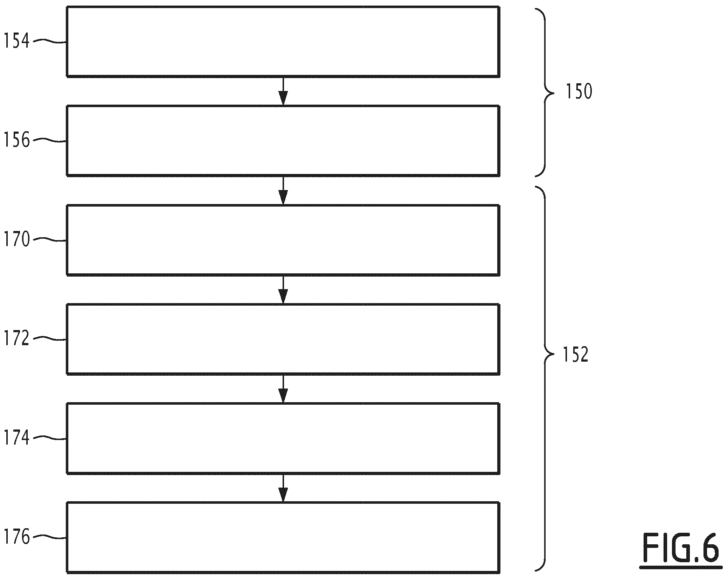

- [Fig. 6] La figure 5 illustre un logigramme de mise en œuvre d'une méthode de détermination de teneurs en l'ensemble de gaz.

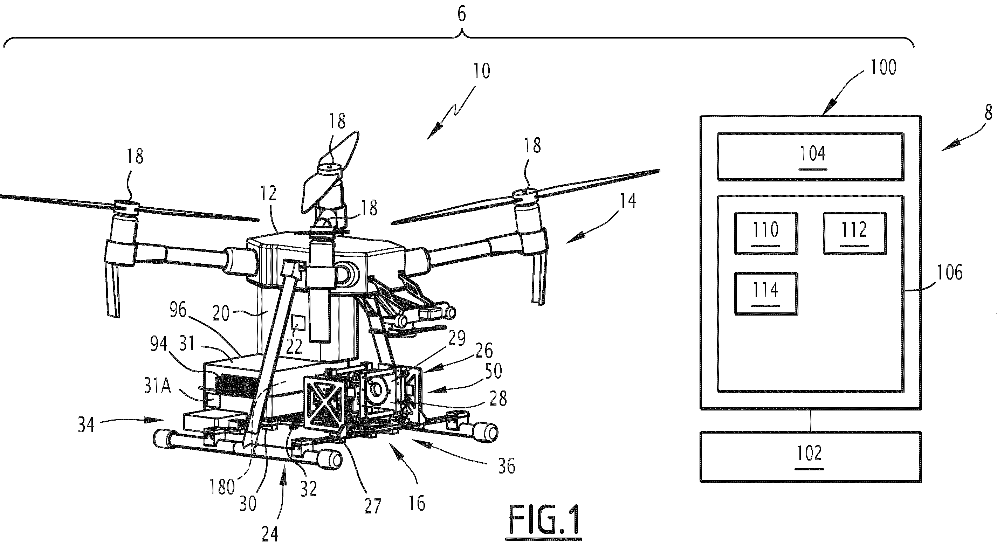

Un exemple d'ensemble 6 de mesure de teneurs dans l'atmosphère d'au moins un gaz traceur ou de préférence, d'un ensemble de gaz comprenant le gaz traceur est représenté sur la figure 1.

L'ensemble de mesure 6 est destiné notamment à mesurer, en une pluralité de positions dans l'atmosphère, les teneurs en un ensemble de gaz, en particulier un ensemble de composés organiques volatils (ou « COV »), pour déterminer une empreinte d'émission de ces gaz.

En utilisant les teneurs déterminées, l'ensemble de mesure 6 est en particulier destiné à déterminer un flux d'émission de l'ensemble de gaz, en particulier un flux d'émission de composés organiques volatils.

Les composés organiques volatils sont par exemple des hydrocarbures tels que l'éthane, le butane, le propane, des aromatiques tels que le benzène. Plus généralement, un composé organique volatil est un composé organique ayant une pression de vapeur de 0,01 kPa ou plus à une température de 293, 15K, par exemple tel que défini dans la Directive 1999/13/CE du Conseil Européen du 11 mars 1999.

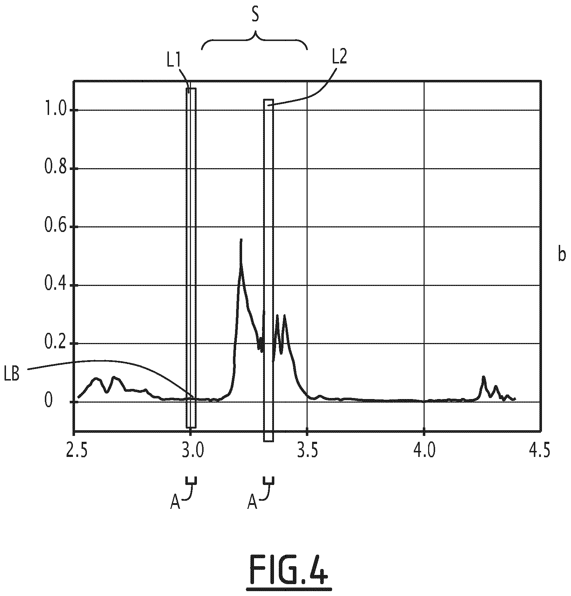

En référence à la figure 4, l'ensemble de gaz dont les teneurs doivent être déterminées présente par exemple une signature spectrale S large, définie notamment dans l'infrarouge (en particulier pour des longueurs d'onde comprises entre 700 nm et 2 µm) ou dans l'ultraviolet (notamment pour des longueurs d'onde comprises entre 10 nm et 380 nm). Par « signature spectrale large », on entend une signature spectrale S s'étendant sur une largeur spectrale généralement supérieure à la largeur d'accordabilité A d'un laser. A titre d'exemple non limitatif,, pour les alcanes la signature spectrale se trouve dans la gamme des vibrations de déformation CH à moins de 3000 cm⁻¹, et dans la gamme des flexions des groupements CH2 entre 1300 cm⁻¹ et 1500 cm⁻¹.

La largeur d'accordabilité d'un laser fait référence à la gamme de longueurs d'onde à laquelle le laser peut émettre, c'est à dire la plage de fréquences sur laquelle le laser peut être ajusté.

Comme visible sur la figure 1, l'ensemble de détermination 6 comporte un drone 10, destiné à mesurer des données représentatives de teneurs en gaz traceur et des données représentatives de référence. Il comprend en outre un système de calcul 8, configuré pour calculer la teneur en gaz traceur et/ou en l'ensemble de gaz, et éventuellement, un flux de gaz traceur et/ou un flux de l'ensemble de gaz, en utilisant les données représentatives mesurées à l'aide du drone 10.

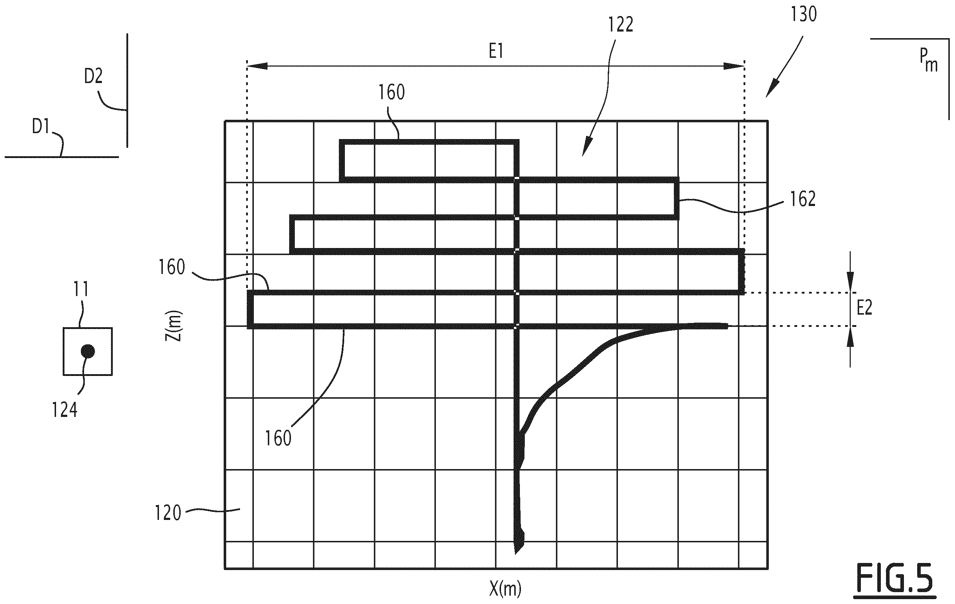

Les données représentatives sont par exemple mesurées en regard d'une installation industrielle 11 (voir figure 5), telle qu'une installation pétrolière, en particulier une installation d'exploitation, de transport, de raffinage, de traitement ou de dépôt d'hydrocarbures.

Le drone 10 est destiné à se déplacer dans l'atmosphère au-dessus et autour de l'installation 11 pour effectuer à divers points dans l'atmosphère au-dessus et autour de l'installation 11, des mesures de données représentatives de référence à une longueur d'onde L1 espacée de la signature spectrale S de l'ensemble de gaz et des mesures de données représentatives de la teneur en gaz traceur à une longueur d'onde L2 au sein de la signature spectrale S du gaz traceur ou de l'ensemble de gaz.

Comme on le verra plus bas, les mesures des données représentatives de référence sont utilisées par le système de calcul 8 pour déterminer une référence de mesure qui correspond à une ligne de base LB pour la mesure de la teneur en gaz traceur.

Les données représentatives de teneur en gaz traceur, corrigées en utilisant les données représentatives de référence sont utilisées pour déterminer la teneur en gaz traceur, puis avantageusement, pour calculer la teneur en un ensemble de gaz à partir de la teneur en gaz traceur.

Dans cet exemple, les données représentatives de référence sont obtenues avantageusement à une longueur d'onde L1 correspondant à un gaz dont la teneur est négligeable par rapport à la teneur en gaz traceur, ou dont la teneur peut être soustraite de l'ensemble de gaz, comme par exemple le méthane.

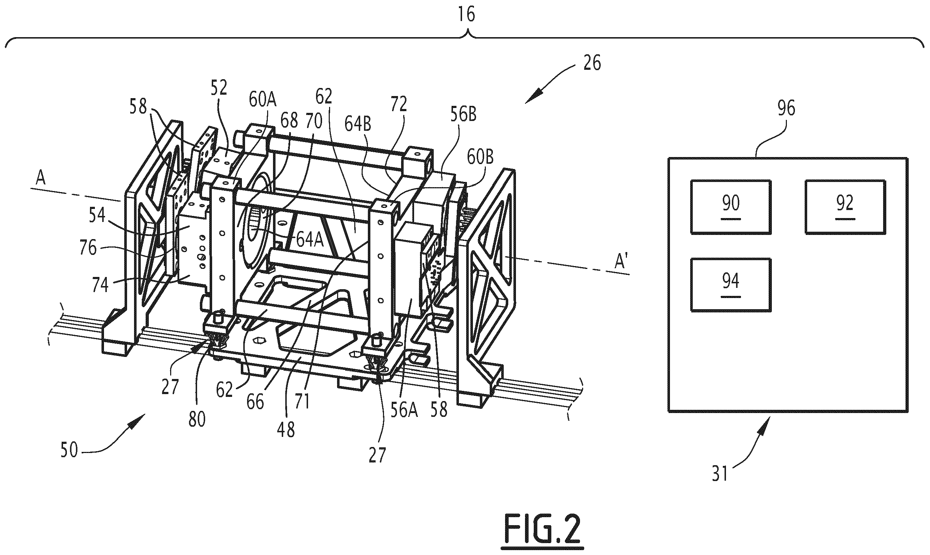

Comme illustré sur la figure 2, le drone 10 comporte un boitier 12, un ensemble de propulsion 14, configuré pour permettre le décollage du boitier 12 à l'écart du sol, et son déplacement en volant dans l'atmosphère au-dessus du sol.

Le drone 10 comporte en outre un ensemble de mesure 16 qui est par exemple positionné sous le boitier 12.

En référence à la figure 1, l'ensemble de propulsion 14 comporte une pluralité d'organes de propulsion 18, qui sont ici des hélices entraînées en rotation par un moteur.

L'ensemble de propulsion 14 comporte en outre une source d'énergie 20 formée ici par une batterie et un système 22 de localisation et de commande du déplacement du drone 10 dans l'atmosphère.

Dans cet exemple, le drone 10 est un drone multi rotor à voilure tournante. Il est dépourvu d'ailes, sa portance étant assurée par l'ensemble de propulsion 14.

Le drone 10 est par exemple un drone quadricoptère à voilure tournante, notamment un drone DJI M300 commercialisé par la société DJI.

Les organes de propulsion 18 sont ici des hélices rotatives autour d'axes sensiblement verticaux. Par « sensiblement verticaux », on entend généralement que les axes de rotation des hélices sont inclinés de moins de 20° par rapport à la verticale.

Lorsque les moteurs des hélices sont alimentés électriquement par la batterie, les hélices sont entraînées en rotation autour de leur axe, entraînant un flux d'air descendant, qui est configuré pour balayer en partie le boitier 12.

Le système de localisation et de commande 22 comporte un capteur de position, notamment un GPS et/ou une centrale inertielle. Il comprend en outre une unité de commande, configurée pour piloter le déplacement du drone 10 le long d'une trajectoire préenregistrée avant le vol et chargée dans le système de localisation et de commande 22, ou de manière déportée et manuelle via une télécommande déportée. L'unité de commande comprend au moins un processeur et une mémoire contenant des modules logiciels configurés pour être exécutés par le processeur afin d'assurer le guidage du drone 10 suivant la trajectoire.

Le drone 10 est ainsi configuré pour suivre automatiquement une trajectoire prédéfinie, ou alternativement, à être piloté manuellement par un opérateur.

En référence à la figure 1, l'ensemble de mesure 16 comporte un support 24 portant un capteur 26 de mesure des données représentatives de référence et des données représentatives du gaz traceur, monté sur le support 24, avantageusement via des amortisseurs 27. Il comprend en outre des capteurs 28, 29 de mesure de la température et de la pression et avantageusement, un capteur d'altitude 30.

L'ensemble de mesure 16 comprend en outre, porté par le support 24, un système de commande 31.

Le support 24 comprend ici une armature ajourée, formée de membrures 32. Dans l'exemple représenté sur la figure 2, l'armature est de forme rectangulaire. Elle présente des membrures 32 suivant les côtés d'un rectangle, et des membrures 32 suivant les diagonales du rectangle.

Les membrures 32 sont par exemple réalisées en polymère, pour alléger l'ensemble de mesure 16. Le polymère est par exemple choisi parmi les polyétheréthercétone, les poly(acrylonitrile butadiène styrène), les poly(acide polylactique), les poly(acrylonitrile styrène acrylate).

Comme illustré sur la figure 2, les membrures 32 de l'armature définissent une première région 34 de support du système de commande 31, et une deuxième région 36 de support du ou de chaque capteur de mesure 26, déportée par rapport à la première région 34.

En référence aux figures 1 et 2, le capteur de mesure des données représentatives 26 comprend au moins une cellule de mesure 50 ouverte à l'atmosphère, au moins une source laser de référence 52, destinée à la détection de données représentatives de référence à l'écart de la signature spectrale S du gaz traceur et de l'ensemble de gaz, et une source laser de mesure 54, destinée à la détection d'un gaz traceur destiné à être quantifié, de préférence pour quantifier la teneur en l'ensemble de gaz.

Le capteur de mesure 26 comprend, pour la ou chaque source laser 52, 54, un détecteur 56A, 56B respectif, ou en variante, un détecteur commun, destiné à recevoir les signaux permettant la détection respectivement des données représentatives de référence et des données représentatives du gaz traceur, les signaux étant respectivement issus de la source laser de référence 52 et de la source laser de mesure 54.

Le capteur 26 comporte en outre avantageusement des plaques d'échange thermique 58 montées respectivement sur chaque source 52, 54 et sur chaque détecteur 56A, 56B.

La cellule de mesure 50 est ici une cellule unique pour la mesure dans le même volume des données représentatives de référence et des données représentatives des teneurs en gaz traceur.

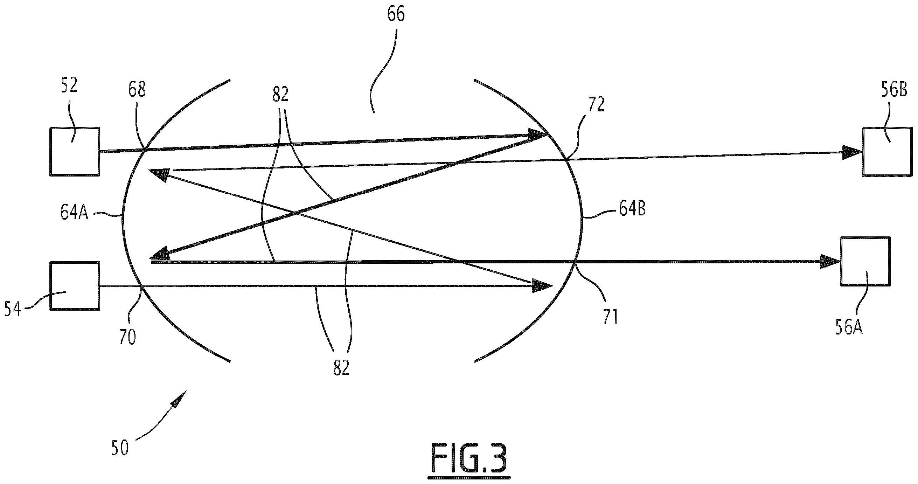

En référence aux figures 2 et 3, la cellule de mesure 50 comporte deux supports 60A, 60B en regard, et des barres de liaison 62 raccordant les supports 60A, 60B. La cellule de mesure 50 comporte en outre des miroirs 64A, 64B en regard, portés respectivement par les supports 60A, 60B, les miroirs 64A, 64B délimitant entre eux une cavité de mesure 66.

Dans cet exemple, les supports 60A, 60B sont montés parallèles l'un à l'autre, perpendiculairement à un axe longitudinal A-A' de la cavité de mesure 66. L'axe A-A' est de préférence horizontal lorsque l'ensemble de mesure 16 repose sur un support plan horizontal.

Les supports 60A, 60B présentent ici une forme prismatique et un contour extérieur polygonal, de préférence carré.

Les barres de liaison 62 fixent la distance entre les supports 60A, 60B. Dans cet exemple, les barres de liaison 62 s'étendent entre les sommets du polygone définissant le contour des supports 60A, 60B. Elles s'étendent parallèles entre elles en délimitant des espaces intermédiaires de passage.

La cavité de mesure 66 est ouverte dans au moins une direction, de préférence dans au moins deux directions, entre les supports 60A, 60B en regard et entre les barres de liaisons 62.

La longueur de la cavité de mesure 66, prises entre les supports 60A, 60B est par exemple inférieure à 50 cm et comprise notamment entre 5 cm et 20 cm.

La longueur de la cavité de mesure 66 est adaptée en fonction de la gamme de teneurs attendues pour le gaz traceur à mesurer. Par exemple, la longueur de la cavité de mesure 66 est plus importante si le gaz traceur est à l'état de traces et/ou si la réponse qu'il possède à la longueur d'onde mesurée est faible. Au contraire, la longueur de la cavité de mesure 66 est moins importante, si le gaz traceur à mesurer est présent avec une teneur relativement forte ou si sa réponse à la longueur d'onde mesurée est forte.

Les miroirs 64A, 64B sont montés chacun respectivement sur un support 60A, 60B pour être placés en regard l'un de l'autre. Les miroirs 64A, 64B sont concaves, avec leurs concavités en regard l'une de l'autre.

Un premier support 60A et un premier miroir 64A comprennent au moins un trou 68, 70, ici deux trous 68, 70 pour permettre respectivement l'injection d'un premier faisceau provenant de la source laser de référence 52 et d'un deuxième faisceau provenant de la source laser de mesure 54.

Le deuxième miroir 64B en regard du premier miroir 64A, et le deuxième support 64B comportent au moins un trou 70, 71, ici deux trous 70, 71 d'extraction de signal, pour permettre à chaque détecteur 56A, 56B de recevoir un signal issu de la cavité de mesure 66.

La source laser de référence 52 et la source laser de mesure 54 sont montées sur une face du premier support 60A, à extérieur à la cavité de mesure 66, de part et d'autre de l'axe longitudinal A-A' de la cavité.

Chaque source 52, 54 comporte un composant laser 74 et avantageusement, un élément 76 de contrôle de la température, par exemple un élément Peltier.

En référence à la figure 4, le composant laser 74 de la source laser de référence 52 est par exemple configuré pour émettre un faisceau laser de référence centré sur une longueur d'onde de référence L1 située à l'écart de la signature spectrale S. Le composant laser 74 de la source laser de mesure 54 est configuré pour émettre un faisceau laser de mesure centré sur une longueur d'onde de mesure L2, distincte de la longueur d'onde L1, et située dans la signature spectrale S.

Les longueurs d'ondes L1, L2 sont de préférence séparées avantageusement d'au moins 5 nm, notamment d'au moins 100 nm.

Comme précisé plus haut, la longueur d'onde de référence L1 est choisie dans une gamme de longueurs d'ondes située à l'écart de la signature spectrale S du gaz traceur.

La source laser de référence 52 émet également avec une largeur spectrale inférieure à la largeur spectrale de la signature spectrale S du gaz traceur. A titre d'exemple non limitatif, la largeur spectrale d'émission de la source laser de référence 52, et plus généralement, la largeur d'accordabilité de la source laser de référence 52 est notamment inférieure à 10 cm⁻¹ par exemple en ajustant le courant et la température d'une diode laser. Cette largeur peut être comprise entre 1,5 cm⁻¹ et 2,0 cm⁻¹, notamment en accordant en faisant uniquement varier le courant.

La longueur d'onde de référence L1 est par exemple choisie à une longueur d'onde caractéristique d'un autre gaz que le gaz traceur ou que l'ensemble de gaz dont la teneur doit être déterminée en utilisant de la quantification de la teneur en gaz traceur. Ce gaz est par exemple le dioxyde de carbone ou le méthane.

Par exemple, pour le méthane la source laser de référence 52 est configurée pour émettre le faisceau laser de référence centré sur la longueur d'onde L1 comprise entre 3230 nm et 3250 nm, notamment entre 3238 nm et 3242 nm.

Pour la détection du gaz traceur, la longueur d'onde de mesure L2 est par exemple choisie dans la signature spectrale S du gaz traceur, par exemple en étant caractéristique d'un groupement moléculaire du gaz traceur.

La source laser de mesure 54 émet aussi avec une largeur spectrale inférieure à la largeur spectrale de la signature spectrale S du gaz traceur. A titre d'exemple non limitatif, la largeur spectrale d'émission de la source laser de mesure 54 et plus généralement, la largeur d'accordabilité de la source laser de mesure 54 est notamment inférieure à 10 cm⁻¹ par exemple en ajustant le courant et la température d'une diode laser. Cette largeur peut être comprise entre 1,5 cm⁻¹ et 2,0 cm⁻¹, notamment en accordant en faisant uniquement varier le courant.

Dans l'exemple non limitatif représenté sur la figure 4, la longueur d'onde L2 est dans la gamme des vibrations de déformation CH du butane. La source laser de mesure 54 est configurée pour émettre le faisceau laser de mesure centré sur la longueur d'onde L2 comprise entre 2925 cm⁻¹ et 3000 cm⁻¹, notamment entre 2965 cm⁻¹ et 2967 cm⁻¹.

La signature spectrale S du gaz traceur est plus large d'au moins 10% que la largeur d'accordabilité de la source laser de mesure 54, empêchant ainsi la détermination, par la seule source laser de mesure 54, de données représentatives de référence utilisables comme ligne de base pour les données représentatives de teneur en gaz traceur.

Plus généralement, la longueur d'onde associée à une molécule cible est choisie en fonction de la signature spectrale de chaque molécule cible et des éventuelles molécules interférentes. La sélection de la longueur d'onde dépend de l'environnement de mesure (pression, température, concentration des molécules cibles et interférentes, ...).

Dans l'exemple qui vient d'être décrit, chaque composant laser de la source laser de référence 52 et la source laser de mesure 54 est par exemple une diode laser. Une diode laser est un composant optoélectronique réalisé à base de matériaux semi-conducteurs. Elle émet de la lumière monochromatique cohérente. Elle est par exemple formée d'une jonction de semi-conducteurs, qui possède trois zones caractéristiques : une couche de confinement de type n, une zone active et une couche de confinement de type p. La diode est par exemple une diode à réaction distribuée (« distributed feed back » en anglais).

Comme indiqué plus haut, la cellule de mesure 50 fonctionne par absorption directe de lumière laser dans la cavité de mesure 66, au contact des gaz dont la teneur est à mesurer. Il s'agit donc d'une cellule de mesure 50 pour réaliser une spectroscopie d'absorption directe au laser (« Direct Laser Absorption Spectrometry » en anglais).

En référence à la figure 3, la cavité de mesure 66 permet de réaliser de multiples réflexions 82 des faisceaux laser injectés depuis la source laser de référence 52 ou depuis la source laser de mesure 54 pour augmenter la longueur du chemin optique. La cellule de mesure est ainsi une cellule spectroscopique à passage multiples, ou cellule de Herriott.

En référence à la figure 2, l'élément de contrôle 76 de la température est configuré pour stabiliser la température des sources lasers 52, 54 et des détecteurs 56A, 56B. Dans l'exemple représenté sur les figures, les plaques d'échange thermique 58 sont montées à l'arrière de la source laser de référence 52 de la source laser de mesure 54 et des détecteurs 56A, 56B, en contact thermique avec les éléments de contrôle de température 76.

Les plaques d'échanges thermique 58 sont formées de métal, par exemple d'aluminium. Elles font saillie par rapport aux sources 52, 54, pour être balayées par le flux d'air engendré par les organes de propulsion 18 lors de la rotation des hélices.

Ainsi, les calories prélevées par l'élément de contrôle de température 76 sont évacuées à l'aide des plaques d'échanges thermique 58, sans qu'il soit nécessaire de monter un ventilateur additionnel pour contrôler la température des sources 52, 54 ou des détecteurs 56A, 56B. Ceci allège le drone 10.

Chaque détecteur 56A, 56B est configuré pour détecter l'intensité d'un signal extrait de la cavité de mesure 66 à des longueurs d'ondes incluant respectivement la longueur d'onde L1 du faisceau d'émission de la source laser de référence 52 et la longueur d'onde L2 du faisceau d'émission de la source laser de mesure 54.

Ainsi, l'intensité mesurée peut être reliée à l'intensité incidente par la loi de Beer-Lambert telle que décrite ci-dessous :$I = I 0 exp \left(L.N.K\right)$ où I est l'intensité mesurée, Io est l'intensité incidente, L est la longueur du chemin optique parcouru dans la cellule de mesure 50, N est le nombre de molécules du gaz étudié dans le parcours et K est le coefficient d'absorption de ce gaz.

En référence à la figure 2, les amortisseurs 27, lorsqu'ils sont présents, comportent des fils ressorts 80 raccordant le support 24 à chacun des supports 60A, 60B de la cellule de mesure 50. Ces fils ressorts 80 sont propres à absorber en partie les vibrations de l'ensemble de propulsion 14 et du mouvement dans l'air du drone 10.

Comme visible sur la figure 1, le capteur 28 de mesure de la température est disposé, entre les supports 60A, 60B en regard. Le capteur 28 est par exemple une thermistance, ou un thermocouple, configuré pour mesurer une résistance électrique d'un élément métallique qui varie en fonction de la température.

Le capteur 29 de mesure de pression comporte par exemple un tube de mesure de pression débouchant dans la cavité de mesure 66.

La présence d'un capteur de mesure de température 28 et d'un capteur de mesure de la pression 29 directement au sein de la cellule de mesure 50, de préférence dans la cavité de mesure 66 renforce la fiabilité des données collectées, en particulier lorsque la concentration des gaz à mesurer dans la cavité de mesure 66 est faible.

Le capteur d'altitude 30, lorsqu'il est présent, comporte un altimètre, muni par exemple d'un laser pointant vers le sol pour mesurer la hauteur à laquelle se trouve le drone 10.

Le système de commande 31 comporte une unité 90 d'alimentation électrique sélective de chacune des sources 52, 54, une unité 92 de recueil de données mesurées par chaque détecteur 56A, 56B et au moins un échangeur thermique 94, configuré pour évacuer la chaleur engendrée par les unités 90, 92 sans ventilation propre. Ces unités sont logées dans un boîtier 96.

L'unité d'alimentation électrique 90 est configuré pour alimenter sélectivement et successivement, à chaque instant de mesure, la source laser de référence 52 et le cas échéant, la source laser de mesure 54 pour obtenir une première phase d'illumination de la cavité de mesure 66 exclusivement par la source laser de référence 52, sans illumination par une autre source laser, en particulier par la source laser de mesure 54, puis une seconde phase d'illumination de la cavité de mesure 66 exclusivement par la source laser de mesure 54, sans illumination par une autre source laser, en particulier par la source laser de référence 52.

Ainsi, des phases de mesure successives de données représentatives de référence, et de la teneur en gaz traceur, peuvent être réalisées dans la même cavité de mesure 66 de la cellule de mesure 50 à des instants de mesure successifs.

L'unité d'alimentation électrique 90 est par exemple raccordée à la source d'énergie 20 de l'organe de propulsion 18.

L'unité de recueil de données 92 comporte au moins une mémoire, configurée pour stocker les données représentatives formées de spectres d'intensité lumineuse en fonction de la longueur d'onde relevés à différents instants par chaque détecteur 56A, 56B.

Les données représentatives sont stockées par exemple à une fréquence supérieure à 1 Hz, en particulier comprise entre 10 Hz et 100 Hz. Les spectres stockés comprennent de préférence un nombre de points supérieurs à 256, et compris par exemple entre 256 et 2696 points.

Ainsi, une très bonne résolution est obtenue pour déterminer l'intensité des pics mesurés dans la cellule de mesure 50 en fonction de la longueur d'onde, ce qui permet d'en déduire des teneurs, même si ces teneurs sont très faibles.

L'unité de recueil des données 92 est raccordée au système de télétransmission 31A pour permettre l'export des données vers une station de réception au sol, lors du vol du drone 10 ou après le vol du drone 10, à une fréquence qui peut être inférieure à la fréquence d'acquisition, par exemple comprise entre 1 Hz et 5 Hz.

L'échangeur thermique 94 est en contact thermique avec chacune des unités d'alimentation 90 et de recueils de données 92. Il est configuré pour évacuer la chaleur produite par ces unités 90, 92.

L'échangeur thermique 94 est configuré pour être balayé par le flux d'air engendré par les organes de propulsion 18, pour évacuer la chaleur produite par les unités 90, 92. Ainsi, aucun ventilateur n'est nécessaire dans le boîtier 96 pour refroidir les unités 90, 92, ce qui réduit le poids et la consommation électrique du drone 10.

Le système de télétransmission 31A comporte un émetteur, configuré pour transmettre des données vers le système de calcul 16, ces données étant par exemple les données recueillies par l'unité 92 ou une fraction de ces données.

Le système de calcul 8 est par exemple situé au sol, à distance du drone 14.

En variante, le système de calcul 8 est embarqué dans le drone 10. Dans le cas où le système de calcul 8 est situé au sol, il est relié au drone 10 et en particulier au système de télétransmission 31A pour permettre la réception des données représentatives collectées par le drone 10 vers le système de calcul 8.

En référence à la figure 1, le système de calcul 8 est situé dans une infrastructure informatique à terre, par exemple dans un nuage informatique (« Cloud » en anglais). Il comprend au moins un calculateur 100 et au moins une interface homme-machine 102 permettant à un utilisateur de se connecter au calculateur 100 pour réaliser des opérations sur le calculateur 100.

L'interface homme-machine 102 comporte par exemple un clavier, un écran, et/ou un organe de commande sur l'écran, tel qu'une souris ou un écran tactile.

Le calculateur 100 comprend de préférence au moins un processeur 104 et une mémoire 106 configurée pour contenir des modules logiciels propres à être exécutés par le processeur 104 pour réaliser des fonctions. En variante, le calculateur 100 se présente au moins partiellement sous la forme d'un ou de plusieurs circuits programmables par exemple de type FPGA (de l'anglais « Field-Programmable Gate Array ») ou sous forme d'un circuit électronique dédié à une application de type ASIC (de l'anglais « Application-Specific Integrated Circuit).

Dans l'exemple représenté sur la figure 1, le calculateur 100 comporte un module 110 de calcul de teneurs en gaz traceur, en utilisant des données représentatives du gaz traceur mesurées par le capteur de mesure 26 et en utilisant des données représentatives de référence mesurées par le capteur de mesure 26, pour en déduire une teneur corrigée en gaz traceur.

Le calculateur 100 comporte en outre un module 112 de calcul d'une teneur en un ensemble de gaz, en utilisant la teneur corrigée en gaz traceur obtenue à partir des données représentatives et d'un modèle de calibration. Il comprend éventuellement un module 114 de calcul de flux en l'ensemble de gaz.

Le module de calcul 110 est configuré pour corriger chaque donnée représentative de teneur en gaz traceur mesurée par le détecteur 56B du capteur de mesure 26, à chaque instant de mesure, en utilisant la donnée représentative de référence, mesurée au même instant de mesure ou à un instant de mesure proche par le premier détecteur 56A du capteur de mesure 26. Ceci est effectué par exemple par soustraction entre les valeurs des données représentatives.

Par « instant de mesure proche », on entend généralement un instant de mesure séparé de moins d'une seconde de l'instant de mesure considéré.

Ainsi, la valeur de la donnée représentative de référence sert de ligne de base LB pour déterminer la valeur de la donnée représentative en gaz traceur. Les données représentatives sont mesurées dans le même capteur de mesure 26, au même instant de mesure ou à des instants de mesures proches, avec les mêmes perturbations pour la mesure, notamment en terme de vibrations ou de turbulences.

Le module de calcul 112 est configuré pour calculer les teneurs en un ensemble de gaz, en utilisant la teneur corrigée en gaz traceur déterminée par le module de calcul 110, et en utilisant le modèle de calibration.

Le modèle de calibration inclut par exemple une spéciation des gaz émis par l'installation 11 parmi l'ensemble de gaz et éventuellement, une détermination de la teneur relative de chaque gaz de l'ensemble de gaz individuellement émis par l'installation 11, en fonction de la teneur en gaz traceur.

Ainsi, le module de calcul 112 est configuré pour calculer une teneur totale en l'ensemble de gaz à chaque point de mesure correspondant à un instant de mesure de la teneur en gaz traceur.

Le module de calcul de flux 114 est configuré, en utilisant des mesures de teneurs réalisées dans un plan de mesure le long d'une trajectoire, à en déduire un flux à travers le plan de mesure, par double intégration surfacique dans le plan de mesure, comme décrit par exemple dans WO 2021204941 ou dans WO 2021234017.

Une méthode de détermination d'une teneur en au moins un ensemble de gaz, en particulier dans un plan de mesure 120 le long d'une trajectoire 122 visibles sur la figure 5, va maintenant être décrite.

La méthode est mise en œuvre en plaçant le plan de mesure 120 de préférence en regard d'une installation industrielle 11, en vue de la détection et de la quantification d'une source 124 de gaz au sein de l'installation 11.

La méthode comporte une phase 150 de mesures en vol du drone 10 pour déterminer des données représentatives de référence et des données représentatives de teneurs en gaz traceur, suivie d'une phase 152 de calcul de la teneur en gaz traceur ou/et en un ensemble de gaz, en utilisant les données représentatives de référence et les données représentatives de teneur en gaz traceur.

Le gaz traceur et l'ensemble de gaz sont présents dans un panache émis à partir de la source 124 au sein de l'installation 11.

Initialement, à l'étape 154, le drone 10 est mis en vol. Les organes de propulsion 18 sont activés par le système de localisation et de commande 22 pour permettre le décollage du drone 10, et son déplacement vers le plan de mesure 120 où les mesures doivent être effectuées.

Les organes de propulsion 18 engendrent une force de portance. Le système de localisation et de commande 22 commande le déplacement du drone 10, soit sous l'effet d'une commande manuelle à distance, soit en suivant un programme automatique chargé dans le système 22.

Lors du vol du drone 10, à l'étape 156, des mesures sont effectuées suivant une trajectoire de mesure 122 dont un exemple est donné sur la figure 5.

Dans l'exemple de la figure 5, la trajectoire de mesure 122 suit par exemple un déplacement en échelle rampante.

Le drone 10 se déplace suivant une pluralité de lignes 160 parallèles à une première direction D1, avec un segment de connexion 162 entre chaque paire de lignes parallèles 160 adjacentes. Le segment de connexion 162 s'effectue suivant une deuxième direction D2 transverse à la première direction D1.

Ici, la première direction D1 est une direction horizontale et la deuxième direction D2 est une direction verticale.

Dans cet exemple, toutes les lignes parallèles 160 balayées par le drone 10 s'étendent sensiblement dans un même plan de mesure 120 vertical.

L'étendue E1 des lignes 160 suivant la première direction D1 est choisie en fonction de la largeur du panache émis par la source 124, pour balayer tout le panache. Cette étendue E1 est généralement supérieure à 20 m et est comprise entre 20 m et 500 m.

La distance entre les lignes 160 est définie par une étendue E2 des segments de connexion 162 suivant la deuxième direction. Cette étendue E2 est par exemple supérieure à 1 m et notamment comprise entre 1 m et 50 m.

La position, l'étendue et l'orientation de la trajectoire de mesure 122 sont par exemple déterminées à partir d'une position supposée de la source 124 et de la direction du vent, comme par exemple décrit dans la demande de brevet français n° 22 12559 de la Demanderesse.

Lors du déplacement du drone 10 suivant la trajectoire de mesure 122, le capteur de mesure des données représentatives 26, le capteur de mesure de température 28, le capteur de mesure de pression 29 et éventuellement le capteur d'altitude 30 lorsqu'il est présent, sont activés à des instants de mesure successifs.

Les mesures par les différents capteurs 26, 28, 29, 30 sont effectuées lors du mouvement du drone 10, sans avoir à immobiliser le drone 10. La fréquence des mesures est avantageusement supérieure à 1 Hz, en particulier comprise entre 10 Hz et 100 Hz.

A cet effet, l'unité d'alimentation électrique 90 alimente sélectivement et successivement la source laser de référence 52, puis la source laser de mesure 54.

Avantageusement, lors de chaque phase d'activation de la source laser de référence 52, le composant laser 74 de la source laser de mesure 54 est désactivé. Le composant laser 74 de la source laser de référence 52 émet un faisceau laser de référence à la longueur d'onde L1 qui est injecté via le trou d'injection 68 dans la cavité de mesure 66.

L'épaisseur du faisceau laser de référence est avantageusement supérieure à 1 mm, et notamment comprise entre 3 mm et 6 mm. Ceci permet de s'affranchir d'artefacts de mesure pouvant être crées par des particules en suspension dans la cavité de mesure 66.

En référence à la figure 3, le faisceau laser de référence se réfléchit successivement sur les miroirs 64A, 64B en effectuant des va et vient dans la cavité de mesure 66 pour augmenter la longueur du chemin optique L.

Un premier signal est recueilli à travers le trou de prélèvement 71, résultant du premier faisceau émis par la source laser de référence 52.

Ce premier signal est capté par le détecteur 56A et les données représentatives de référence captées par le détecteur 56A sont envoyées à l'unité de recueil de données 92 pour être stockées. Comme indiqué plus haut, ces données représentatives de référence, permettent d'établir une intensité d'une ligne de base. Ces données représentatives de référence sont prises à l'écart de la signature spectrale S du gaz traceur ou d'un ensemble de gaz comprenant le gaz traceur.

Puis, dans chaque phase d'activation de la source laser de mesure 54, le composant laser 74 de la source laser de référence 52 est désactivé. Le composant laser 74 de la source laser de mesure 54 émet un faisceau laser de mesure à la longueur d'onde L2 distincte de la longueur d'onde L1. Ce faisceau laser est introduit via le trou d'injection 70 dans la cavité de mesure 66.

Comme précédemment, l'épaisseur du faisceau laser de mesure est avantageusement supérieure à 1 mm, et notamment comprise entre 3 mm et 6 mm.

Le faisceau laser de mesure se réfléchit successivement sur les miroirs 64A, 64B en effectuant des va et vient dans la cavité de mesure 66 pour augmenter la longueur du chemin optique L.

Un deuxième signal est recueilli à travers le trou de prélèvement 72 résultant du deuxième faisceau ainsi émis par la source laser de mesure 54. Ce deuxième signal est capté par le détecteur 56B et les données représentatives captées par le détecteur 56B sont envoyées à l'unité de recueil de données 92 pour être stockées. Les données représentatives sont des données représentatives de teneur en gaz traceur, prises dans la signature spectrale S de ce gaz ou d'un ensemble de gaz comprenant ce gaz traceur.

Les mesures étant effectuées successivement à chaque instant de mesure permettent de déterminer, des intensités lumineuses à deux longueurs d'ondes L1, L2, représentatives respectivement d'une référence de ligne de base et de la teneur en un gaz traceur.

A l'étape 170, lorsque le drone 10 a fini sa mission et revient au sol, les données représentatives relevées par les détecteurs 56A, 56B à chaque instant de mesure et stockées dans la mémoire de l'unité de recueil de données 92, sont transmises par le système de télétransmission 31A vers le système de calcul 8, par exemple via une station au sol.

Dans le système de calcul 8, pour chaque instant de mesure, les données représentatives sont stockées en association avec des données de position géographique du drone 10 mesurées par le système de localisation et de commande 22 à l'instant de mesure, avec la température et la pression mesurées par les capteurs 28, 29 à l'instant de mesure, éventuellement avec l'altitude mesurée par le capteur d'altitude 30 à l'instant de mesure et avec un horodatage de l'instant de mesure.

Le calculateur 100 est alors activé à l'étape 172 pour calculer, à chaque instant de mesure la teneur en au moins le gaz traceur.

A cet effet, le module de calcul 110 détermine la valeur de l'intensité lumineuse à la longueur d'onde L2, et soustrait de cette intensité lumineuse la valeur de l'intensité lumineuse à la longueur d'onde L1, qui sert de référence de ligne de base. Ainsi, une valeur corrigée des données représentatives en gaz à mesurer est obtenue.

Le module de calcul 110 calcule alors la teneur corrigée en gaz traceur à chaque point de mesure le long de la trajectoire de mesure 122.

A l'étape 174, le module de calcul 112 calcule, à chaque point de mesure correspondant à un instant de mesure, la teneur en un ensemble de gaz présentant une signature spectrale S large à partir de la teneur en gaz traceur déterminée par le module de calcul 110, et du modèle de calibration. Ainsi, la teneur en l'ensemble de gaz est déterminée à chaque point de mesure le long de la trajectoire 122.

A l'étape 176, le module de calcul de flux 114 effectue alors une double intégration des données de teneurs en l'ensemble de gaz, en utilisant des données de vitesse de vent soit à chaque point de mesure, soit à chaque altitude pour déterminer un flux en l'ensemble de gaz.

Des exemples de méthode de calcul de flux sont donnés dans WO 2021204941 ou encore dans WO 2021234017.

Ainsi, grâce à la méthode selon l'invention, il est très simple de mettre en œuvre un procédé de mesure de données représentatives d'un gaz traceur pour quantifier un ensemble de gaz, même si ce gaz traceur ou cet ensemble de gaz présente une signature spectrale S large, supérieure à la largeur d'accordabilité d'une source laser 52, 54.

Le procédé comprend la mesure simultanée ou quasi simultanée d'un signal de référence, à l'écart de la signature spectrale S, pour permettre la définition d'une ligne de base fiable. Les deux mesures sont effectuées au sein de la même cellule de mesure 50, de manière successive au même instant de mesure, ou à des instants de mesure proches, sous les mêmes perturbations en termes de vibration, de turbulence ou d'atmosphère assurant une mesure différentielle fiable.

Ensuite, à partir de la teneur en gaz traceur, un modèle de calibration est utilisé pour obtenir une estimation fiable de la teneur en un ensemble de gaz, et le flux associé à partir d'une source 124.

Dans une variante, le drone 10 est équipé en outre d'au moins un capteur 180 qui présente une performance inférieure à celle du capteur de mesure 26.

**Le ou chaque** capteur 180 présente avantageusement une largeur de détection plus large que la largeur d'accordabilité de la source laser 54 mais une fréquence de mesure inférieure, par exemple inférieure à 5 fois la fréquence de mesure de la source laser 54.

La largeur de détection balayée par le capteur 180 étant plus large que celle balayée par la source laser 54, des données de corrections sont acquises par le capteur 180 à une fréquence moindre que les données représentatives, permettant la détection d'autres bandes représentatives de la signature spectrale S, situées à l'écart de la longueur d'onde de mesure L2. Ces données de correction sont par exemple représentatives d'autres gaz de l'ensemble de gaz. Le module de calcul 112 utilise avantageusement les données de correction en plus de la teneur en gaz traceur déterminée par le module de calcul 112 pour recaler la teneur totale en l'ensemble de gaz ou pour déterminer ou/et recaler les teneurs individuelles en chacun des gaz de l'ensemble de gaz.

Un premier capteur 180 comprend par exemple un détecteur à photoionisation (désigné par l'acronyme « PID »), notamment un capteur MiniPID 2 HS commercialisé par la société IONSCIENCE. Ce premier capteur 180 complète la sensibilité aux composés organiques volatiles, notamment aromatiques.

Un deuxième capteur 180 est avantageusement utilisé en complément du premier capteur 180. Le deuxième capteur 180 est configuré pour mesurer l'humidité afin de corriger la contribution du spectre de l'eau sur la mesure à la longueur d'onde L2.

Ainsi, si le capteur 180 n'est pas adéquat pour effectuer des mesures en ligne sur un ensemble de gaz, à une fréquence compatible avec un vol d'un drone 10, il permet néanmoins de recaler la mesure effectuée à l'aide de la source laser 54 sur le gaz traceur, à intervalles réguliers, en améliorant la précision subséquente sur la teneur totale en l'ensemble de gaz ou/et sur les teneurs en chacun des gaz de l'ensemble de gaz à déterminer.

## Revendications

1. Procédé de mesure de données représentatives de teneurs en au moins un gaz traceur ou en ensemble de gaz comportant le gaz traceur, le procédé comprenant les étapes suivantes :
- vol d'un drone (10) dans l'atmosphère à l'écart du sol, le drone (10) comportant au moins une cellule (50) de mesure optique et au moins une source laser de mesure (54), destinée à la détection du gaz traceur;
- injection, à une pluralité d'instants de mesure, dans la cellule de mesure (50) portée par le drone (10) d'un faisceau laser engendré par la source laser de mesure (54), à une longueur d'onde de mesure caractéristique du gaz traceur à détecter, la longueur d'onde de mesure étant située au sein d'une signature spectrale caractéristique du gaz traceur ou de l'ensemble de gaz à quantifier ;
- détection, par un détecteur (56B) de mesure d'un signal de mesure provenant de la cellule de mesure (50) et résultant de l'injection du faisceau laser de mesure dans la cellule de mesure (50),
**caractérisé en ce que** la signature spectrale du gaz traceur ou de l'ensemble de gaz à mesurer est plus large qu'une largeur d'accordabilité de la source laser de mesure, le procédé comprenant les étapes suivantes:
- injection, à au moins un instant de référence, dans une cellule de mesure (50) portée par le drone (10) d'un faisceau laser de référence émis par une source laser de référence (52) à une longueur d'onde de référence située à l'écart de la signature spectrale du gaz traceur ou de l'ensemble de gaz ;
- détection par un détecteur de référence (56A) d'un signal de référence provenant de l'injection du faisceau laser de référence dans la cellule de mesure (50) portée par le drone (10);
- transmission de données représentatives de teneur en gaz traceur obtenues à partir du signal de mesure et de données représentatives de référence obtenues à partir du signal de référence à un système de calcul (8) configuré pour calculer une teneur en gaz traceur ou/et en l'ensemble de gaz à partir des données représentatives de teneur en gaz traceur et des données représentatives de référence.

2. Procédé selon la revendication 1, dans lequel l'étape d'injection du faisceau laser de référence est effectuée à une pluralité d'instants de référence, chaque instant de référence correspondant à un instant de mesure.

3. Procédé selon l'une quelconque des revendications 1 ou 2, dans lequel le faisceau laser de référence est injecté dans la même cellule de mesure (50) que le faisceau laser de mesure.

4. Procédé selon l'une quelconque des revendications 1 à 3, comprenant une alternance d'injection du faisceau laser de mesure à chaque instant de mesure, et du faisceau laser de référence à chaque instant de référence, respectivement sans injection du faisceau laser de référence lorsque le faisceau laser de mesure est injecté et sans injection du faisceau laser de mesure lorsque le faisceau laser de référence est injecté.

5. Procédé selon l'une quelconque des revendications précédentes, dans lequel la au moins une cellule de mesure (50) comporte deux miroirs (64A, 64B) situés en regard et à l'écart l'un de l'autre et délimitant entre eux une cavité de mesure (66), le faisceau laser de mesure étant injecté entre les deux miroirs (64A, 64B) et se réfléchissant successivement sur les deux miroirs (64A, 64B) avant d'être extrait vers le détecteur de mesure (56B) hors de la cavité de mesure (66).

6. Procédé selon l'une quelconque des revendications précédentes, dans lequel la signature spectrale est la signature spectrale d'un ensemble de composés organiques volatils.

7. Procédé selon l'une quelconque des revendications précédentes, dans lequel la fréquence d'injection du faisceau laser de mesure dans la cellule de mesure (50) est supérieure à 10 Hz et est comprise notamment entre 20 Hz et 100 Hz.

8. Procédé selon l'une quelconque des revendications précédentes, comprenant la mesure de données de correction obtenues dans la signature spectrale à l'aide d'un capteur additionnel (180) opérant à une fréquence de mesure inférieure à la fréquence d'injection du faisceau laser de mesure, le capteur additionnel (180) étant configuré pour détecter les données de correction sur une largeur spectrale supérieure à la largeur d'accordabilité de la source laser de mesure, le procédé comprenant la transmission des données de correction obtenues par le capteur additionnel (180) au système de calcul (8), le système de calcul (8) étant configuré pour calculer la teneur en gaz traceur ou en l'ensemble de gaz en utilisant les données de correction.

9. Méthode de détermination d'une teneur en au moins un gaz traceur ou en un ensemble de gaz comprenant le gaz traceur, comprenant les étapes suivantes :
- mise en œuvre d'un procédé de mesure de données représentatives selon l'une quelconque des revendications 1 à 8 ;
- calcul, par un système de calcul (8) de la teneur en gaz traceur ou en l'ensemble de gaz à une pluralité d'instants de mesure en utilisant les données représentatives du gaz traceur et les données représentatives de référence.

10. Méthode selon la revendication 9, dans laquelle le calcul comprend, pour chaque donnée représentative de teneur obtenue à un instant de mesure, la détermination d'une intensité du signal de mesure constituant les données représentatives de teneur, et la détermination d'une intensité du signal de référence constituant les données représentatives de référence, le calcul de la teneur en gaz traceur ou en l'ensemble de gaz comprenant un calcul d'une différence entre l'intensité du signal de mesure et l'intensité du signal de référence.

11. Méthode selon l'une quelconque des revendications 9 à 10, dans laquelle le calcul de la teneur en gaz traceur ou en l'ensemble de gaz comprend le calcul d'une teneur en un ensemble de gaz en utilisant les données représentatives de teneur mesurées à la longueur d'onde de mesure au sein de la signature spectrale de l'ensemble de gaz, les données représentatives de référence mesurées à l'écart de la signature spectrale et un modèle de calibration configuré pour déterminer une concentration en tous les gaz de l'ensemble de gaz en utilisant des données représentatives de teneur et des données représentative de référence, en utilisant avantageusement une spéciation de l'ensemble de gaz présent dans l'ensemble de gaz.

12. Méthode selon la revendication 11, dans laquelle le calcul de la teneur en gaz traceur ou en l'ensemble de gaz comprend le calcul d'une teneur corrigée en gaz traceur à partir des données représentatives de teneur et des données de référence, le modèle de calibration reliant la teneur corrigée en gaz traceur à une concentration en tous les gaz de l'ensemble de gaz.

13. Ensemble de détermination de teneurs en au moins un gaz traceur ou en un ensemble de gaz comprenant le gaz traceur, l'ensemble de détermination comprenant :
- un drone (10) configuré pour voler dans l'atmosphère à l'écart du sol, le drone (10) comportant au moins une cellule (50) de mesure optique et une source laser de mesure (54), destinée à la détection du gaz traceur, un système de commande (31) configuré pour activer la source laser de mesure (54) pour l'injection à une pluralité d'instants de mesure, dans la cellule de mesure (50) portée par le drone (10), un faisceau laser engendré par la source laser de mesure (54), à une longueur d'onde de mesure caractéristique du gaz traceur à détecter
le drone (10) comportant en outre un détecteur (56B) de mesure d'un signal de mesure provenant de la cellule de mesure (50) et résultant de l'injection du faisceau laser de mesure dans la cellule de mesure (50), la longueur d'onde de mesure étant située au sein d'une signature spectrale caractéristique du gaz traceur ou de l'ensemble de gaz à quantifier,
**caractérisé en ce que** la signature spectrale du gaz traceur ou de l'ensemble de gaz à mesurer est plus large qu'une largeur d'accordabilité de la source laser de mesure (54),
le drone (10) comportant ;
- une source laser de référence (52), le système de commande (31) étant configuré pour activer la source laser de référence (52) à au moins un instant de référence, pour injecter dans une cellule de mesure (50) portée par le drone (10) un faisceau laser de référence émis par la source laser de référence (52) à une longueur d'onde de référence située à l'écart de la signature spectrale du gaz traceur ou de l'ensemble de gaz ;
- un détecteur de référence (56A) d'un signal de référence provenant de l'injection du faisceau laser de référence dans la cellule de mesure (50) portée par le drone (10);
- un système (31A) de transmission de données représentatives de teneur en gaz traceur obtenues à partir du signal de mesure et de données représentatives de référence obtenues à partir du signal de référence à un système de calcul (8)
l'ensemble de détermination comprenant un système de calcul (8) configuré pour calculer une teneur en gaz traceur ou/et en l'ensemble de gaz à partir des données représentatives de teneur en gaz traceur et des données représentatives de référence.

14. Ensemble selon la revendication 13, dans lequel le faisceau laser de référence est injecté dans la même cellule de mesure (50) que le faisceau laser de mesure.

15. Ensemble selon l'une quelconque des revendications 13 ou 14, dans lequel le drone (10) comporte un capteur additionnel (180) opérant à une fréquence de mesure inférieure à la fréquence d'injection du faisceau laser de mesure, le capteur additionnel (180) étant configuré pour mesurer des données de correction obtenues dans la signature spectrale sur une largeur spectrale supérieure à la largeur d'accordabilité de la source laser de mesure (54), le système de transmission (31A) étant configuré pour transmettre les données de correction obtenues par le capteur additionnel (180) au système de calcul (8), le système de calcul (8) étant configuré pour calculer la teneur en gaz traceur ou en l'ensemble de gaz en utilisant les données de correction.
